Europäisches Patentamt

European Patent Office

Office européen des brevets

(19)

(11) Numéro de publication: **0 228 976**
**B1**

(12) **FASCICULE DE BREVET EUROPEEN**

(45) Date de publication du fascicule du brevet:
08.08.90

(51) Int. Cl.⁵: **A01B 59/00**, A01B 59/04,
A01B 59/048, A01D 34/86,
A01B 39/16

(21) Numéro de dépôt: 86420297.3

(22) Date de dépôt: 09.12.86

(54) **Dispositif d'attelage d'un outil traîné à un tracteur.**

(30) Priorité: 11.12.85 FR 8518555

(43) Date de publication de la demande:
15.07.87 Bulletin 87/29

(45) Mention de la délivrance du brevet:
08.08.90 Bulletin 90/32

(84) Etats contractants désignés:
AT BE CH DE GB IT LI LU NL SE

(56) Documents cités:
DE-A- 1 482 105
DE-A- 2 729 811
FR-A- 1 413 658
FR-A- 1 603 932
FR-A- 2 390 303
US-A- 3 008 732
US-A- 4 518 043

(73) Titulaire: ROUSSEAU (Société Anonyme), 40-44, Avenue
Auguste Wissel BP 32, F-69250 Neuville-sur-Saône(FR)

(72) Inventeur: Rousseau, Claude, 1, Chemin Neuf,
F-69660 Collonges-au-Mont-d'Or(FR)

(74) Mandataire: Schmitt, John, Cabinet John Schmitt 9, rue
Pizay, F-69001 Lyon(FR)

ACTORUM AG

## Description

La présente invention concerne un dispositif d'attelage à un tracteur d'un outil traîné, faucheuse à rotor par exemple, mais non exclusivement.

Le brevet FR-A 2 390 303 décrit un châssis muni de roues, comprenant une traverse et deux longerons, susceptible d'être associé à un tracteur classique pour l'équiper d'appareils de travail. Cet outil auxiliaire amovible constitue un équipement lourd et complexe pour des appareils qui ne peuvent travailler qu'à côté du tracteur.

Au contraire, un outil accouplé à un tracteur au moyen du dispositif d'attelage objet de l'invention, peut travailler aussi bien en position axiale derrière le tracteur, qu'en position latérale sur le côté dudit tracteur, le dispositif ainsi autorisant le dépot reglable de l'outil par rapport à la voie du tracteur.

Ce dispositif est caractérisé par le fait qu'il comprend un jeu de barres latérales de longueur fixe accouplant l'un des côtés de l'outil à une traverse fixée à l'avant du tracteur et un tirant de longueur fixe reliant l'arrière du tracteur à l'autre côté de l'outil par ailleurs associé audit tirant au moyen d'un bras de longueur variable permettant de régler le déport de l'outil.

Une caractéristique de ce dispositif réside dans le fait que la manœuvre de l'outil traîné pour l'amener en position axiale ou déportée, est réalisée au moyen d'un bras de longueur variable, par exemple un vérin hydraulique, associant le tirant arrière à l'outil. Dans ce but, les bras et le tirant d'accouplement du tracteur à l'outil sont fixés au moyen d'articulations.

Une autre caractéristique de ce dispositif réside dans le fait que le vérin hydraulique qui permet de manœuvrer l'outil traîné, est actionné par un distributeur relié à un circuit de commande volontaire permettant de régler le déport de l'outil.

Un autre caractéristique de ce dispositif réside dans le fait que le distributeur qui actionne le vérin hydraulique de manœuvre de l'attelage, est relié à un circuit de commande de sécurité prioritaire branché sur des détecteurs de proximité disposés le long des barres latérales qui accouplent l'avant du tracteur à l'outil traîné.

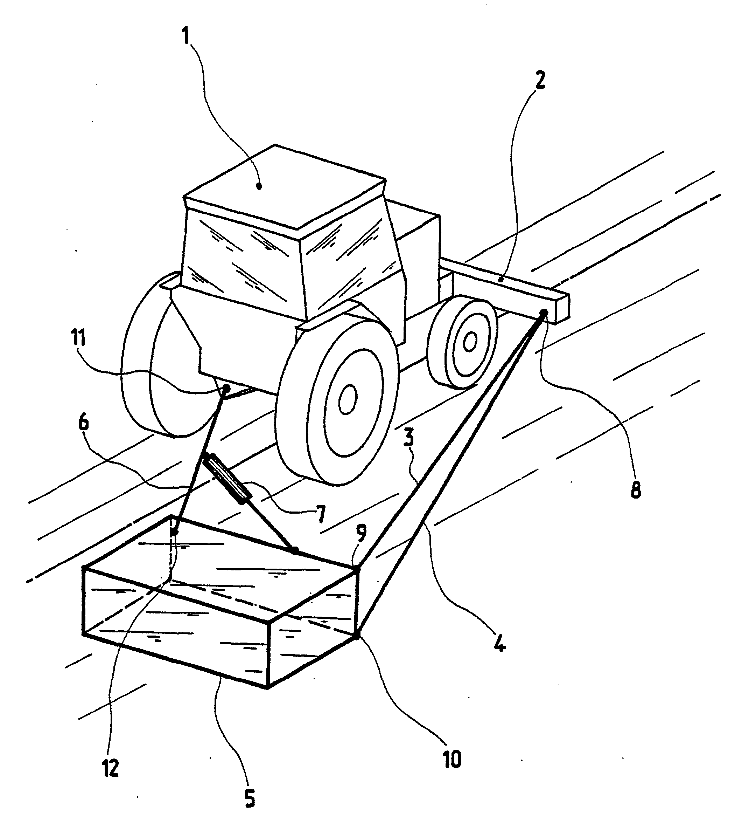

Les détails de ce dispositif ainsi que les avantages qu'il procure, seront mieux compris par la description qui va suivre se référant à la figure unique du dessin montrant schématiquement un outil traîné attelé à un tracteur, selon l'invention.

Sur le dessin, le repère 1 désigne un tracteur conventionnel représenté en traits fins, à l'avant duquel est fixée ou attelée une traverse 2 qui déborde largement sur l'un des côtés dudit tracteur.

L'outil traîné, symbolise par un parallélépipède 5, est accouplé à la traverse 2 au moyen d'un jeu de barres 3 et 4 de longueur fixe. Sous la forme d'exécution représentée, la barre supérieure 3 part de la traverse 2 d'un point 8 commun avec la barre inférieure 4 et rejoint l'angle supérieur du petit côté droit de l'outil 5 en un point 9, tandis que la barre inférieure 4 rejoint l'angle opposé verticalement de l'outil en un point 10.

L'autre petit côté gauche de l'outil est accouplé à l'arrière du tracteur 1 au moyen d'un tirant 6 de longueur fixe. Une de ses extrémités rejoint le châssis du tracteur en un point 11 et son autre extrémité rejoint l'outil 5 en un point 12.

Les points 8, 9, 10, 11 et 12 sont des articulations qui permettent la manœuvre de l'outil 5 pour l'amener en position de déport comme illustré par le schéma, ou en position axiale signalée par le trait mixte situé dans la voie du tracteur.

Cette manœuvre de l'outil 5 s'opère au moyen d'un vérin hydraulique 7 dont le cylindre est fixé au tirant 6 tandis que la tige du piston est accrochée à l'arête supérieure située entre les deux petits côtés de l'outil 5 où sont articulés les barres 3 et 4 et le tirant 6.

Le vérin hydraulique 7 est actionné par un distributeur, non représenté, relié à deux circuits de commande.

Un premier circuit de commande volontaire du vérin 7 est actionné par le conducteur et permet de manœuvrer l'outil 5. C'est ainsi que lorsque le vérin 7 se rétracte, il entraîne le déplacement de l'outil 5 à l'intérieur, jusqu'à l'amener dans l'axe de la voie du tracteur 1. Au contraire, lorsque le vérin 7 se détend, c'est-à-dire s'allonge, il entraîne le déplacement de l'outil vers l'extérieur dans la position représentée sur le dessin. Le déport de l'outil est réglé par le conducteur.

Un deuxième circuit de commande de sécurité, prioritaire sur le précédent, est branché sur des détecteurs de proximité reliés à des capteurs disposés le long des barres 3 et/ou 4. Ainsi, pendant le travail, si un obstacle, situé entre l'extérieur du tracteur 1 et l'extérieur de l'outil 5, survient, il est détecté par les capteurs qui commandent alors la rentrée de l'outil 5 jusqu'à une position permettant de ne pas heurter l'obstacle.

Il va de soi qu'on choisira des profilés métalliques de section et résistance appropriées pour réaliser les barres 3 et 4 et le tirant 6. De même, on choisira des articulations 8-12 convenablement dimensionnées pour accoupler les barres 3, 4 et le tirant 5 à la traverse 2, à l'outil 5 et au tracteur 1.

En outre, les barres 3 ou 4 et 6 peuvent être reliées au système de relevage du tracteur 1 de manière que l'outil 5 puisse être relevé et porté pour faciliter le transport entre les lieux de travail.

## Revendications

1. Dispositif d'attelage d'un outil traîné à un tracteur autorisant le déport réglable de l'outil par rapport à la voie du tracteur, caractérisé par le fait qu'il comprend un jeu de barres latérales de longueur fixe (3, 4) accouplant l'un des côtés de l'outil (5) à une traverse (2) fixée à l'avant du tracteur (1) et un tirant (6) de longueur fixe reliant l'arrière du tracteur à l'autre côté de l'outil par ailleurs associé au tirant au moyen d'un bras (7) de longueur variable permettant de régler le déport de l'outil.

2. Dispositif suivant la revendication 1, caractérisé par le fait que les barres (3, 4) et le tirant (6) sont fixés à la traverse (2), à l'outil (5) et au tracteur (1) au moyen d'articulations (8–12).

3. Dispositif suivant la revendication 1, caractérisé par le fait que le bras (7) de longueur variable est un vérin hydraulique actionné par un distributeur.

4. Dispositif suivant les revendications 1 et 3, caractérisé par le fait que le distributeur actionnant le vérin (7) est relié à un circuit de commande volontaire permettant au conducteur de régler le déport de l'outil.

5. Dispositif suivant les revendications 1 et 3, caractérisé par le fait que le distributeur actionnant le vérin (7) est relié à un circuit de commande de sécurité prioritaire branché sur des détecteurs de proximité provoquant la rentrée automatique de l'outil (5).

6. Dispositif suivant les revendications 1 et 5, caractérisé par le fait que des capteurs sont disposés le long des barres (3 ou 4).

7. Dispositif suivant la revendication 1, caractérisé par le fait que les barres (3 ou 4 et 6) sont reliées au relevage du tracteur (1).

## Claims

1. Device for hitching a trailed implement to a tractor allowing the adjustable offset of the implement with respect to the track of the tractor, characterized by the fact that it comprises a set of lateral bars of fixed length (3, 4) coupling one of the sides of the implement (5) to a cross-piece (2) fixed to the front of the tractor (1) and a tie-rod (6) of fixed length connecting the rear of the tractor to the other side of the implement which is further associated with the tie-rod by means of an arm (7) of variable length for adjusting the offset of the implement.

2. Device according to claim 1, characterized by the fact that the bars (3, 4) and the tie-rod (6) are fixed to the cross-piece (2), to the implement (5) and to the tractor (1) by means of articulations (8–12).

3. Device according to claim 1, characterized by the fact that the variable length arm (7) is a hydraulic jack actuated by a distributor valve.

4. Device according to claims 1 to 3, characterized by the fact that the distributor valve actuating the jack (7) is connected to a voluntary control circuit allowing the driver to adjust the offset of the implement.

5. Device according to claims 1 and 3, characterized by the fact that the distributor valve actuating the jack (7) is connected to a priority safety control circuit connected to proximity detectors causing automatic retraction of the implement (5).

6. Device according to claims 1 and 5, characterized by the fact that sensors are disposed along the bars (3 or 4).

7. Device according to claim 1, characterized by the fact that the bars (3 or 4 and 6) are connected to the power-lift of the tractor (1).

## Patentansprüche

1. Kupplungsvorrichtung zum Anbau von angetriebenen Geräten an einen Schlepper, die ein einstellbares Versetzen des Gerätes gegenüber der Schlepperspur ermöglicht, dadurch gekennzeichnet, daß sie einen Satz Seitenstangen fester Länge (3, 4) besitzt, welche das Gerät (5) an einer Seite an eine Querstrebe (2) ankoppeln, die an der Vorderseite des Schleppers (1) befestigt ist, sowie eine Zugstange (6) fester Länge, mit der die andere Seite des Gerätes an die Schlepperrückseite angekoppelt ist, wobei diese Zugstange zudem über einen Arm (7) veränderlicher Länge mit dem Gerät verbunden ist, über den der Versatz des Gerätes gegenüber dem Schlepper eingestellt werden kann.

2. Vorrichtung nach Patentanspruch 1, dadurch gekennzeichnet, daß die Seitenstangen (3, 4) und die Zugstange (6) über Gelenkvorrichtungen (8–12) an Querstrebe (2), Gerät (5) und Schlepper (1) angekoppelt sind.

3. Vorrichtung nach Patentanspruch 1, dadurch gekennzeichnet, daß der Arm (7) veränderlicher Länge ein über ein Verteilerventil betätigter hydraulicher Zylinder ist.

4. Vorrichtung nach Patentanspruch 1 und 3, dadurch gekennzeichnet, daß das Verteilerventil, das den hydraulischen Zylinder (7) betätigt, an eine Steuerschaltung angeschlossen ist, über die der Fahrer den Versatz des Gerätes einstellen kann.

5. Vorrichtung nach Patentanspruch 1 und 3, dadurch gekennzeichnet, daß das den hydraulischen Zylinder (7) betätigende Verteilerventil mit einem Steuerkreis prioritärer Sicherheit verbunden ist, der an Näherungsschalter angeschlossen ist, welche ein automatisches Einfahren des Gerätes (5) auslösen.

6. Vorrichtung nach Patentanspruch 1 und 5, dadurch gekennzeichnet, daß die Sensoren an den Seitenstangen (3, 4) angebracht sind.

7. Vorrichtung nach Patentanspruch 1, dadurch gekennzeichnet, daß die Stangen (3 oder 4 und 6) mit dem Hebemechanismus des Schleppers (1) verbunden sind.